# EUROPEAN PATENT SPECIFICATION

(11) **EP 3 861 167 B1**
(45) Date of publication and mention of the grant of the patent: **09.12.2026**
(21) Application number: 19869925.8
(22) Date of filing: 01.10.2019
(51) Int. Cl.: D21H 19/82, B32B 27/10, B32B 27/32, C08L 23/04, D21H 27/36

(54) **POLYMER COATED PAPER AND PAPERBOARD**
POLYMERBESCHICHTETES PAPIER UND POLYMERBESCHICHTETE PAPPE
PAPIER ET CARTON ENDUITS DE POLYMÈRE

(30) Priority: 03.10.2018 SE 1851188
(43) Date of publication of application: 11.08.2021
(73) Proprietor: Stora Enso Oyj, 00101 Helsinki (FI)
(72) Inventor: RIBU, Ville, 53900 Lappeenranta (FI); NEVALAINEN, Kimmo, 48910 Kotka (FI); TORISEVA, Juuso, 33870 Tampere (FI); SUOKAS, Esa, 33580 Tampere 58 (FI); KUUSIPALO, Jurkka, 33540 Tampere (FI)
(74) Representative: Steinrud, Henrik
(86) International application number: PCT/IB2019/058322
(87) International publication number: WO 2020/070631

(56) References cited:
- EP-A1- 2 077 296
- EP-B1- 1 836 232
- WO-A1-03/033237
- WO-A1-2014/083466
- WO-A1-2014/153073
- WO-A1-2015/125101
- WO-A1-2017/114704
- CN-A- 103 009 753
- US-A- 5 196 269
- US-A1- 2018 058 010

## Description

### Technical field

The present disclosure relates to a method for producing a coated paper and paperboard comprising a polyethylene coating, to the polyethylene coated paper and paperboard, as well as to a heat sealed paper or paperboard.

### Background

Coating of paper and paperboard with plastics is often employed to combine the mechanical properties of the paperboard with the barrier and sealing properties of a plastic film. Paperboard provided with even a relatively small amount of a suitable plastic material can provide the properties needed to make the paperboard suitable for many demanding applications.

Paper or paperboard as such is generally suitable for the packaging of dry products. However, untreated paperboard is of limited use in direct contact with moist or greasy products, because moisture will affect the mechanical properties of the packaging, and absorbed grease will cause staining of the paper. These effects will impair the protective function as well as the appearance of the packaging. Polyethylene (PE) coating of paper and paperboard is often suitable for packaging applications where moisture barrier properties are important. Examples include packages for fresh and frozen foods, such as vegetables, meats, fish, and ice cream. One important application for PE coated paperboard is for the manufacture of waterproof paper cups.

Extrusion coating is a process by which a molten plastic material is applied to a substrate, such as paper or paperboard to form a very thin, smooth and uniform layer. The coating can be formed by the extruded plastic itself, or the molten plastic can be used as an adhesive to laminate a solid plastic film onto the substrate. Common plastic resins used in extrusion coating include polyethylene (PE), polypropylene (PP), and polyethylene terephthalate (PET).

Extrusion coating may be used to achieve, e.g., moisture protection, barrier properties for water vapour, oxygen, aromas, etc., dirt or grease resistance, heat sealability, and/or to impart a desired finish or texture to a substrate surface.

Extrusion coating drastically expands the range of applications for paper and paperboard. The thin plastic layer imparts resistance to grease and moisture and also in some instances heat resistance. The plastic coatings can also be used for heat sealing. Depending on the application, the paper or paperboard may be extrusion coated on one or both sides.

For environmental and economic reasons, it is generally desirable to keep the plastic coating as thin as possible, as long as the barrier and protective properties are maintained at an acceptable level. In many cases however, further reduction of the thickness (or grammage) of the plastic coating is limited by impaired adhesion and stability of the film formation in the extrusion process, and the formation of pinholes. For example, PE is typically extrusion coated to a grammage of 15-25 g/m². PE resins conventionally used in the manufacture of paper cups cannot be extrusion coated on paper or paperboard to a grammage of less than 12 g/m², without loss of adhesion, reduced heat sealability and increased pinhole formation, leading to imperfections in the coated product.

In extrusion coating and lamination of paper and paperboard with plastics it is very important that satisfactory adhesion of the plastic to the substrate is obtained. The plastic adhesion depends mainly on the surface properties of the substrate and the heat content of the plastic melt when applied to the paperboard. Inadequate adhesion between the plastic coating and the paper or paperboard is a common and constant problem.

Pinholes are microscopic holes that can form in the plastic film during the coating process. The main reasons for the appearance of pinholes include irregularities in the substrate surface (e.g. high surface roughness or loose fibres), an uneven coating distribution, or too low coating grammage.

Adhesion can be improved by surface treatment of the substrate for example with corona discharge or ozone, but there remains a need for improved solutions for reducing plastic coating grammage in extrusion coating of PE, while maintaining good adhesion, heat sealability and stability of the film formation in the extrusion process.

WO 2014/153073 A1 is directed to a composite structure that includes a fiber-containing layer, and a mineral-containing layer covering the fiber-containing layer. The mineral-containing layer comprises from about 20% to about 70% by weight of mineral particles.

EP 1 836 232 B1 is directed to a material that may comprise a substrate as a first layer (I) and a multimodal polymer composition (II) as a further layer. The multilayer material may comprise a further layer (III) of LDPE.

### Description of the invention

It is an object of the present disclosure to reduce the minimum grammage of a PE resin required to achieve sufficient adhesion, heat sealability, and/or stability of the film formation in extrusion coating.

It is a further object of the present disclosure to provide a PE resin coated paper or paperboard, which allows for reduced total grammage of the PE resin, such as a grammage of less than 12 g/m², while maintaining good adhesion of the PE resin to the paper or paperboard and avoiding the formation of pinholes.

It is a further object of the present disclosure to provide a method for manufacturing PE resin coated paper or paperboard, which allows for reduced grammage of the PE resin, such as a grammage of less than 12 g/m², while maintaining good stability of the film formation in the extrusion process.

It is a further object of the present disclosure to provide a method for manufacturing PE resin coated paper or paperboard, which allows for improved stability of the film formation in the extrusion process at low grammage of the PE resin.

The above mentioned objects, as well as other objects as will be realized by the skilled person in the light of the present disclosure, are achieved by the various aspects of the present disclosure.

According to a first aspect illustrated herein, there is provided a paper or paperboard comprising a polymeric coating, said polymeric coating comprising:
a first coating layer attached to the paper or paperboard surface, said first coating layer consisting essentially of a blend of:
   1 - 49 % by weight of a high density polyethylene (HDPE), medium density polyethylene (MDPE) or linear low density polyethylene (LLDPE), or a mixture thereof, and 51 - 99 % by weight of a low density polyethylene (LDPE); and
a second coating layer attached to the first coating layer, said second coating layer consisting essentially of a low density polyethylene (LDPE);
wherein the first and second coating layers have a combined grammage of less than 12 g/m² and wherein the first coating layer is formed by extrusion coating onto the paper or paperboard surface and wherein the second coating layer is formed by extrusion coating onto the first coating layer.

Paper generally refers to a material manufactured in thin sheets from the pulp of wood or other fibrous substances comprising cellulose fibers, used for writing, drawing, or printing on, or as packaging material.

Paperboard generally refers to strong, thick paper or cardboard comprising cellulose fibers used for boxes and other types of packaging. Paperboard can either be bleached or unbleached, coated or uncoated, and produced in a variety of thicknesses, depending on the end use requirements.

The term coating, as used herein, refers to an operation in which the surface of a substrate is covered with a composition to impart a desired properties, finish or texture to the substrate. The coating can be a multilayer coating wherein the PE coating resin can be used in one or several layers. The coating can be applied to one side or both sides of the paper or paperboard.

The problems with poor adhesion and pinhole formation in PE-coatings at lower grammages is especially pronounced in the coating of paper and paperboard. The fiber based substrate and its natural voids and surface roughness likely plays a significant role here. Current waterproof paper cups are prepared from polyolefin-coated paperboard structures having a polyolefin layer such as low-density polyethylene (LDPE) with a density in the range of 0.910-0.940 g/cm³. The coating grammage is typically 12 g/m² or higher. This conventional LDPE cannot be extrusion coated on paper or paperboard to a coating grammage of less than 12 g/m², without loss of adhesion and stability of the film formation leading to imperfections in the coated product.

The present inventors have now found that using a specific combination of different PE types, specifically a first coating layer comprising a blend of a high density polyethylene (HDPE), medium density polyethylene (MDPE) or linear low density polyethylene (LLDPE), or a mixture thereof, and a low density polyethylene (LDPE), the minimum grammage of PE required to achieve sufficient adhesion and stability of the film formation in extrusion coating of paper and paperboard can be significantly reduced. Adequate adhesion is important in many converting operations, such as printing and heat sealing.

The inventors have surprisingly found that with the inventive coating structure having a first coating layer comprising a blend of a high density polyethylene (HDPE), medium density polyethylene (MDPE) or linear low density polyethylene (LLDPE), or a mixture thereof, and a low density polyethylene (LDPE) as an adhesion layer, and a second coating layer consisting essentially of a low density polyethylene (LDPE) as the top layer, the total coating grammage can be reduced further than what is possible with a coating structure comprising only the blend, and also further than what is possible with a similar structure in which the order of the layers is reversed, i.e. having the blend as the top layer and the LDPE as the adhesion layer. This shows that not only the blend composition, but also the order of the layers affects the coating method and the coating obtained.

The first coating layer comprises a blend of a high density polyethylene (HDPE), medium density polyethylene (MDPE) or linear low density polyethylene (LLDPE), or a mixture thereof, and a low density polyethylene (LDPE).

Low density polyethylene (LDPE) has rheological properties that are suitable for production of film by extrusion. LDPE has some long branches and many short branches. Typically, there may be three long branches and 30 short branches per molecule. The molecular weight is relatively low, and it has a broad molecular weight distribution. The melt strength and the shear-thinning nature of LDPE enhance processing. LDPE films have relatively low tensile strength but good impact strength. LDPE films show good clarity and gloss. The good clarity and gloss result from relatively low crystallinity. LDPE is obtained by the high-pressure radical polymerization process, typically in an autoclave or tubular reactor. The autoclave generally results in more branching and broader molecular weight distribution. LDPE has a broad melting range, with a peak melting temperature of 110 °C. The density of LDPE is typically in the range of from 0.910 to 0.940 g/cm³.

High density polyethylene (HDPE) has a linear structure, with little or no branching. HDPE is typically prepared by the Ziegler-Natta, Phillips or Unipol processes. These processes involve relatively low pressure and are catalyzed by an organometallic complex with a transition metal. Polymerisation is usually performed in slurry with a liquid such as heptane, or in the gas phase with the caralyst in a fluidized bed form. The density of HDPE is typically in the range of from 0.930 to 0.970 g/cm³.

Medium density polyethylene (MDPE) is a variation of HDPE where some short branches are introduced by copolymerisation with a 1-alkene, such as 1-butene, 1-hexene or 1-octene. The density of MDPE is typically in the range of from 0.926 to 0.940 g/cm³.

HDPE and MDPE show a more newtonian rheology than LDPE, and is therefore less suitable for extrusion processing. HDPE and MDPE have higher crystallinity and therefore higher tensile strength than LDPE, though their impact strength can be deficient for many applications.

Linear low density polyethylene (LLDPE) is a copolymer of ethylene and a 1-alkene, typically 1-butene, 1-hexene or 1-octene, though branched alkenes such as 4-methyl-1-pentene are also used. These polymers have densities in the range 0.918-0.940 g/cm³ and they contain 2-7 % by weight of the 1-alkene. Like HDPE, they are polymerized using multisite catalysts such as Ziegler-Natta with either a gas-phase or slurry process. The comonomer composition typically has a broad distribution, so that some molecules have few branches while others have many branches. This distribution is reflected in the broad melting temperature range of the LLDPE. The properties of LLDPE tend to be in between those of LDPE and HDPE. They have short branches but not long branches, so that crystallisation-dependent mechanical properties are improved, but processing rheological properties are inferior to those of LDPE.

The skilled person would expect that LDPE would exhibit the lowest pinhole sensitivity due to its strain hardening behavior during the extrusion coating process. This behavior would be expected to protect the coating from pinhole formation due to on defects in film but also due to unevenness of fiber based substrate. Surprisingly, the present inventor has now found that the introduction of a HDPE, MDPE or LLDPE into the LDPE can significantly reduce pinhole formation and thus the lowest coating amount required in the first extrusion coating layer for paper or paperboard.

In some embodiments, the polymeric coating does not comprise any further coating layers besides the first coating layer and the second coating layer, i.e. the polymeric coating consists of the first coating layer and the second coating layer. In some embodiments the polymeric coating comprises one or more further coating layers besides the first coating layer and the second coating layer.

In some embodiments, the first coating layer consists essentially of a blend of: 1 - 39 % by weight, such as 1 - 29 % by weight, such as 1 - 19 % by weight, of a high density polyethylene (HDPE), medium density polyethylene (MDPE) or linear low density polyethylene (LLDPE), or a mixture thereof, and 61 - 99 % by weight, such as 71 - 99 % by weight, such as 81 - 99 % by weight, by weight of a low density polyethylene (LDPE).

As used herein, the wording "consists essentially of" means that the coating layer consists of at least 95 % by weight, preferably at least 98 % by weight, of the component in question. The remaining portion may be other polymers or additives.

The formulation of a coating resin may vary greatly depending on the intended use of the coating and the coated paper or paperboard. Coating compositions may include a wide range of ingredients in varying quantities to improve the end performance of the product or processing of the coating. In some embodiments, the PE coating comprises at least one additional component selected from the group consisting of a polymer other than a PE, a pigment (e.g. TiO₂ or carbon black), a dye, and a filler (e.g. CaCO₃, talc).

The first coating layer is formed by extrusion coating onto the paper or paperboard surface. The extrusion coated PE blend coating layer may serve to promote adhesion of subsequently applied or coextruded polymeric coating layers. The extrusion coated PE blend layer may for example serve to promote adhesion of the subsequently applied or coextruded second coating layer consisting essentially of a low density polyethylene (LDPE).

The second coating layer is formed by extrusion coating onto the first coating layer. Preferably, the first and second coating layers are formed simultaneously by coextrusion coating.

The PE blend used in the first coating layer of the present invention allows for production of coated paper or paperboard with improved stability of the film formation and adhesion of the PE coating to the paper or paperboard at low total grammage of PE, such as a grammage of less than 12 g/m².

The first and second coating layers have a combined grammage of less than 12 g/m². Preferably, the first and second coating layers have a combined grammage in the range of 5-12 g/m². In some embodiments, the first and second coating layers have a combined grammage of less than 10 g/m², such as in the range of 5-10 g/m², preferably less than 8 g/m², such as in the range of 5-8 g/m².

In some embodiments, the first coating layer has a grammage of less than 5 g/m², such as in the range of 1-5 g/m², preferably less than 4 g/m², such as in the range of 1-4 g/m²,more preferably less than 3 g/m², such as in the range of 1-3 g/m².

In some embodiments, the second coating layer has a grammage of less than 10 g/m², such as in the range of 4-10 g/m², preferably less than 8 g/m², such as in the range of 4-8 g/m², more preferably less than 6 g/m², such as in the range of 4-6 g/m².

The first coating layer comprises a blend of a high density polyethylene (HDPE), medium density polyethylene (MDPE) or linear low density polyethylene (LLDPE), or a mixture thereof, and a low density polyethylene (LDPE). The HDPE has a density in the range of 0.930-0.970 g/cm³, the MDPE has a density in the range of 0.926-0.940 g/cm³, the LLDPE has a density in the range of 0.918-0.940 g/cm³, and the LDPE has a density in the range of 0.910-0.940 g/cm³.

In some embodiments, the first coating layer comprises a blend of MDPE and LDPE. The MDPE preferably comprises higher alpha-olefin branching, preferably octene.

In some embodiments, the second coating layer has a lower density than the first coating layer.

In some embodiments, the second coating layer is the top layer of the polymeric coating.

In some embodiments, the polymeric coating has better adhesion to the paper or paperboard surface than an LDPE coating with the same total grammage.

The inventive paper or paperboard is particularly useful in the manufacture of sealed paper or paperboard products, for example waterproof paper cups. According to a second aspect illustrated herein, there is provided a sealed paper or paperboard product comprising paper or paperboard according to the first aspect described herein. In a preferred embodiment, the product is a paper cup.

According to a third aspect illustrated herein, there is provided a method for manufacturing a polyethylene (PE) coated paper or paperboard substrate, comprising:
a) providing paper or paperboard substrate,
b) applying at least one layer of a molten first polymeric resin to a surface of said substrate by extrusion coating to form a first polymeric coating layer, said first polymeric resin consisting essentially of a blend of:
   1 - 49 % by weight of a high density polyethylene (HDPE), medium density polyethylene (MDPE) or linear low density polyethylene (LLDPE), or a mixture thereof, and
   51 - 99 % by weight of a low density polyethylene (LDPE),
c) applying at least one layer of a molten second polymeric resin to a surface of said first polymeric coating layer by extrusion coating to form a second polymeric coating layer, said second polymeric resin consisting essentially of a low density polyethylene (LDPE),
d) allowing the first and second coating layers to cool down and solidify, and
e) recovering the PE coated paper or paperboard substrate.

The first and second coating layers of the third aspect may further be defined as set out above with reference to the first aspect.

In some embodiments, the first and second coating layers are formed simultaneously by coextrusion coating.

In some embodiments, the method does not comprise applying any further coating layers besides the first coating layer and the second coating layer, i.e. polymeric coating the formed PE coated substrate consists of the first coating layer and the second coating layer. In other embodiments the method comprises applying one or more further coating layers besides the first coating layer and the second coating layer.

While the invention has been described with reference to various exemplary embodiments, it will be understood by those skilled in the art that various changes may be made and equivalents may be substituted for elements thereof without departing from the scope of the invention. Therefore, it is intended that the invention not be limited to the particular embodiment disclosed as the best mode contemplated for carrying out this invention, but that the invention will include all embodiments falling within the scope of the appended claims.

### Brief description of the drawings

Figure 1 is an optical micrograph illustrating coating layer thickness of the coating structure 1 at the pinhole limit of about 11 g/m². Magnification in the optical micrograph is 400x.
Figure 2 is a diagram showing adhesion properties of the coating structure 1 as function of the decreasing coating weight.
Figure 3 is a diagram showing pinhole properties of the coating structure 1 as function of the decreasing coating weight.
Figure 4 is an optical micrograph (400x) illustrating coating layer thickness of the coating structure 2 at the pinhole limit of the coating weight about 10 g/m².
Figure 5 is a diagram showing adhesion properties of the coating structure 2 as function of the decreasing coating weight.
Figure 6 is a diagram showing pinhole properties of the coating structure 2 as function of the decreasing coating weight.
Figure 7 is an optical micrograph (400x) illustrating coating layer thickness of the coating structure 3 at the pinhole limit of the coating weight about 5.5 g/m².
Figure 8 is a diagram showing adhesion properties of the coating structure 3 as function of the decreasing coating weight.
Figure 9 is a diagram showing pinhole properties of the coating structure 3 as function of the decreasing coating weight.
Figure 10 is an optical micrograph (400x) illustrating coating layer thickness of the coating structure 4 at the pinhole limit of the coating weight about 9 g/m².
Figure 11 is a diagram showing adhesion properties of the coating structure 4 as function of the decreasing coating weight.
Figure 12 is a diagram showing pinhole properties of the coating structure 4 as function of the decreasing coating weight.
Figure 13 is an optical micrograph (400x) illustrating coating layer thickness of the coating structure 5 at the pinhole limit of the coating weight about 12 g/m².
Figure 14 is a diagram showing adhesion properties of the coating structure 5 as function of the decreasing coating weight.
Figure 15 is a diagram showing pinhole properties of the coating structure 5 as function of the decreasing coating weight.

### Examples

The invention will now be explained with the aid of five different low density polyethylene (LDPE) based coating structures, which were extrusion coated onto the same type of paperboard (Cupforma Natura 195 gsm, Stora Enso Oy) using the same extrusion coating equipment and the same optimized processing parameter set-up. The effect of the addition of MDPE /DOWLEX 2062GC, density 939 kg/m³) on the coating properties of a branched LDPE grade (Borealis CA7230, density 923 kg/m³) was studied by blending experiments. Draw down properties of the PE based coating structures were assessed extrusion coating with increasing line speed until polymer curtain break-up. Coating properties were measured as a function of layer thickness (coating weight, i.e. grammage).

A pilot line configuration having two single-screw extruders (1 and 2) and having a typical chill and nip roll arrangement was used in the extrusion coating procedures of examples 1-5 below. A conventional wide taper land die with lip heaters, inner deckles and encapsulation systems was used. The coating weight (grammage) of the extrusion coated structures was measured according to the standard EN ISO 536. Five (5) parallel measurements were done at each line speed. The actual film layer thicknesses on the coated paperboard samples were determined on an Axioskop 40 polarizing microscope (Carl Zeiss Light Microscopy, Germany).

The adhesion of the coated polymer layer to the paperboard substrate was assessed using the manual coating peeling evaluation method. An X-figure is cut in the coated film layer on the substrate and then the coating film is peeled off in the machine and transverse directions. If fibers are torn from the substrate, then the adhesion can be evaluated by determining the amount of the torn fibers. The size of the coating surface area of the peeled film covered by torn fibers is the visual measure of the adhesion value. When there are no fibers attached on the coating peeled, the coating is not adhered onto the substrate i.e., the adhesion value is one (1). When only few substrate fibers are covering the peeled coating surface, the adhesion value is two (2). When less than 50 % of the peeled coating area is covered by torn substrate fibers, the adhesion value is three (3). When more than 50 % of the peeled coating area is covered by torn substrate fibers, the adhesion value is four (4). When the peeled coating is totally (100 %) covered by the torn fibers, the adhesion is five (5). When the coating is not all adhering to the substrate, i.e. it is loose, the adhesion value is zero (0).

The amount of pinholes in the coating structures was measured using the colored turpentine oil solution penetration method as follows:
- Pinhole solution ingredients: 1) Turpentine oil (L-Turpentine) as a solvent, 2) Sudan III (Sudan G) as a red colorant (1 %), 3) Anhydrous calcium chloride (5 %).
- The colored turpentine oil solution was applied by brush on the polymer coated cardboard.
- Solution was kept on the surface for 10 min allowing it to penetrate through possible pinholes in coating and to dry out.
- The number of pinholes on a surface area of 100 cm² of the opposite side of coated structure were calculated and marked as the result.
- Three (3) parallel measurements were made, all of which had to show no pinholes at the grammage in question to qualify as pinhole free.

### Example 1 - LDPE as top and adhesion layer (Comparative example)

The coating structure 1 consisting of low density polyethylene (LDPE, Borealis CA7230) as the first coating layer (1) and of the same low density polyethylene (LDPE) as the second coating layer (2) was co-extrusion coated onto the paperboard (Cupforma Natura 195 gsm, Stora Enso Oy) using the fixed processing parameter set-up. The second coating layer (2) was the top layer in the coating structure.

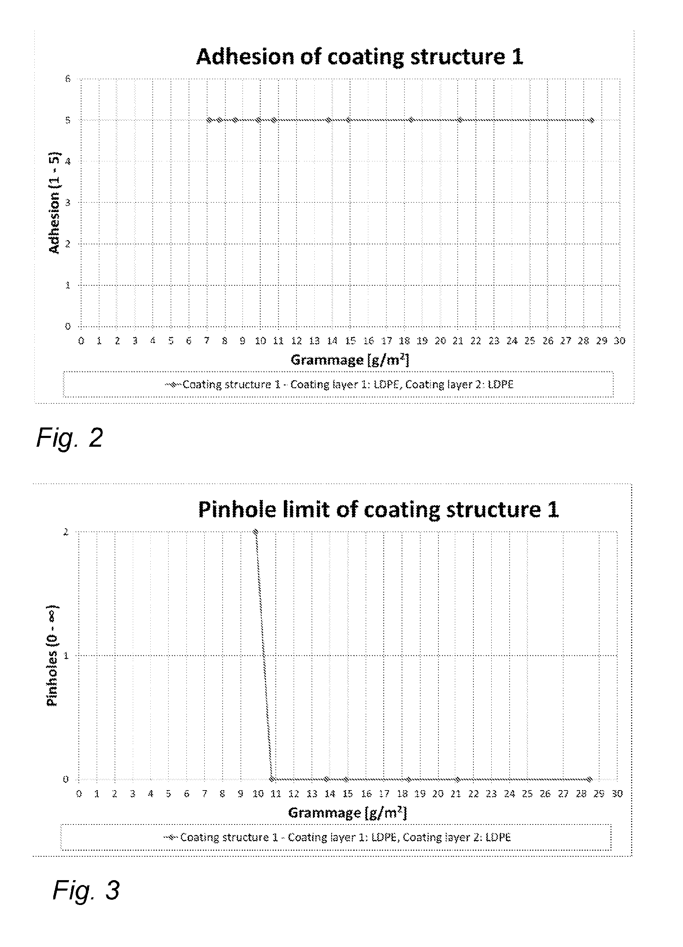

The lowest coating weight obtainable with coating structure 1 was 7 g/m² (see Figure 2).

The adhesion strength was perfect (the value of 5) down to the lowest coating weight of 7 g/m².

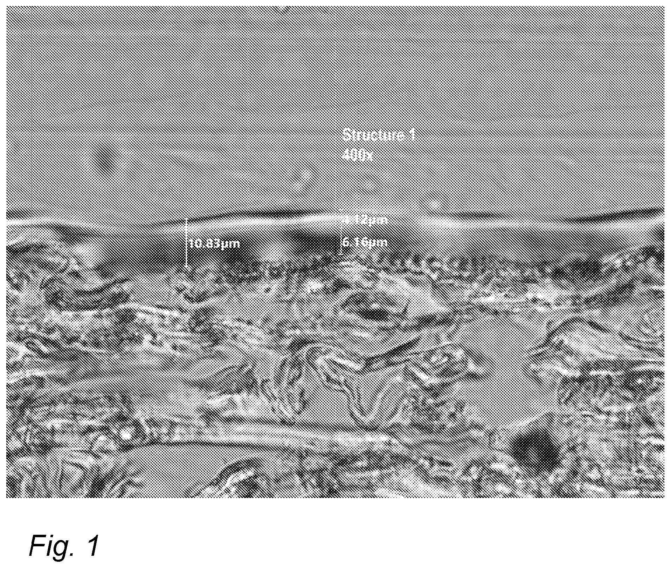

Below a coating weight of about 11 g/m² pinholes started to appear in the coating structure 1 (see Figure 3). The thickness of the first and second coating layer was then 6.2 and 4.1 µm, respectively (see Figure 1). The draw down ratio (DDR) at the pinhole limit was 54.

### Example 2 - MDPE/LDPE blend as top layer and LDPE as adhesion layer (comparative example)

The coating structure 2 consisting of low density polyethylene (LDPE, Borealis CA7230) as the first coating layer (1) and of a blend of a medium density polyethylene (MDPE, DOWLEX 2062GC) and the same low density polyethylene (LDPE) as the second coating layer (2) was co-extrusion coated onto the paperboard (Cupforma Natura 195 gsm, Stora Enso Oy) using the fixed processing parameter set-up. The blend consisted of 80 % by weight of the LDPE and 20 % by weight of the MDPE. The second coating layer (2) was the top layer in the coating structure.

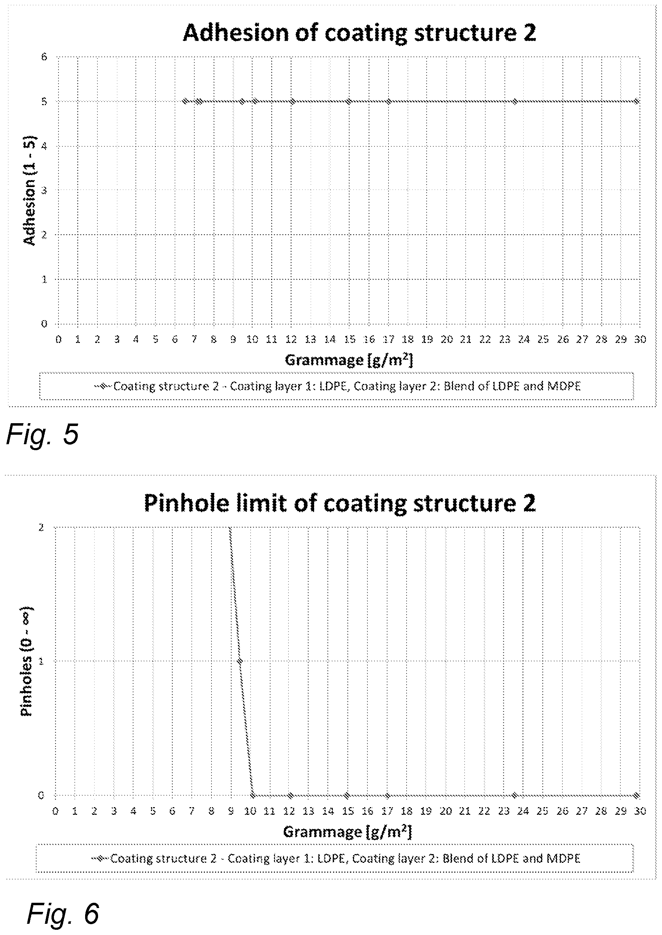

The lowest coating weight obtainable with coating structure 2 was 6.5 g/m² (see Figure 5).

The adhesion strength was perfect (the value of 5) down to the lowest coating weight of 6.5 g/m².

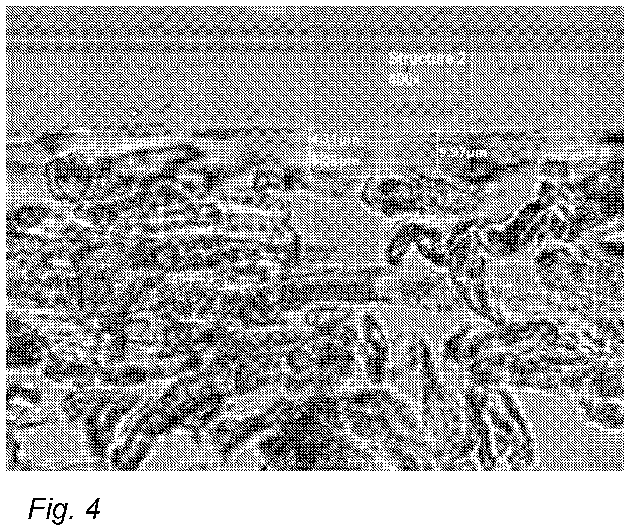

Below a coating weight of about 10 g/m² pinholes started to appear in the coating structure 2 (see Figure 6). The thickness of the first and second coating layer was then 6.0 and 4.3 µm, respectively (see Figure 4). The draw down ratio (DDR) at the pinhole limit was 57.

### Example 3 - LDPE as top layer and MDPE/LDPE blend as adhesion layer

The coating structure 3 consisting of a blend of medium density polyethylene (MDPE, DOWLEX 2062GC) and low density polyethylene (LDPE, Borealis CA7230) as the first coating layer (1) and of and the same low density polyethylene (LDPE) as the second coating layer (2) was co-extrusion coated onto the paperboard (Cupforma Natura 195 gsm, Stora Enso Oy) using the fixed processing parameter set-up. The blend consisted of 80 % by weight of the LDPE and 20 % by weight of the MDPE. The second coating layer (2) was the top layer in the coating structure.

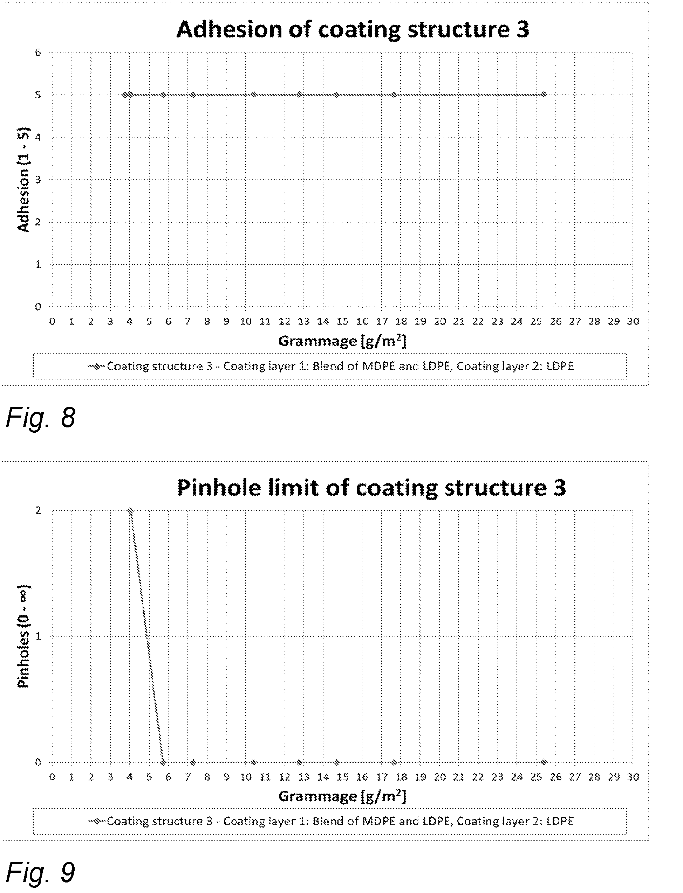

The lowest coating weight obtainable with coating structure 2 was 3.8 g/m² (see Figure 8).

The adhesion strength was perfect (the value of 5) down to the lowest coating weight of 3.8 g/m².

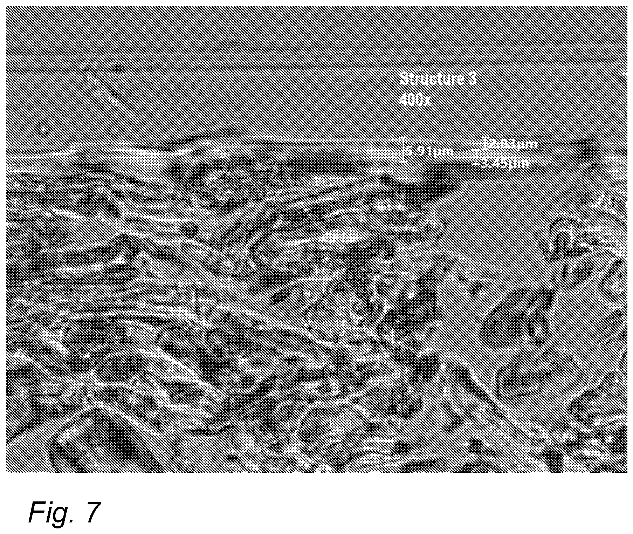

Below a coating weight of about 5.5 g/m² pinholes started to appear in the coating structure 3 (see Figure 9). The thickness of the first and second coating layer was then 3.4 and 2.8 µm, respectively (see Figure 7). The draw down ratio (DDR) at the pinhole limit was 103.

### Example 4 - MDPE/LDPE blend as top and adhesion layer (comparative example)

The coating structure 4 consisting of a blend of medium density polyethylene (MDPE, DOWLEX 2062GC) and low density polyethylene (LDPE, Borealis CA7230) as the first coating layer (1) and of and the same blend of medium density polyethylene (MDPE) and low density polyethylene (LDPE) as the second coating layer (2) was co-extrusion coated onto the paperboard (Cupforma Natura 195 gsm, Stora Enso Oy) using the fixed processing parameter set-up. The blend consisted of 80 % by weight of the LDPE and 20 % by weight of the MDPE. The second coating layer (2) was the top layer in the coating structure.

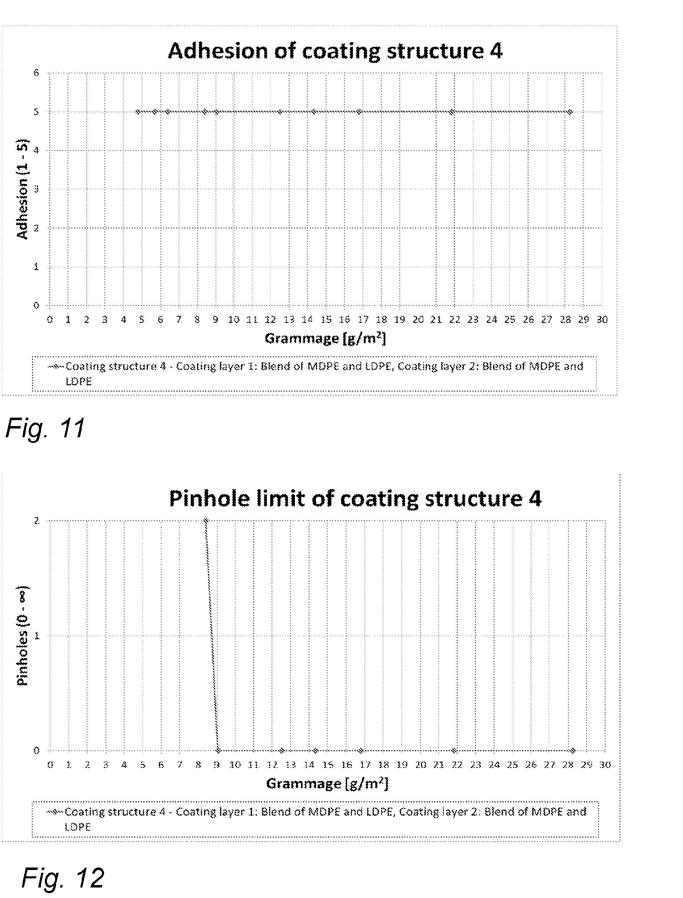

The lowest coating weight obtainable with coating structure 2 was 4.8 g/m² (see Figure 11).

The adhesion strength was perfect (the value of 5) down to the lowest coating weight of 4.8 g/m².

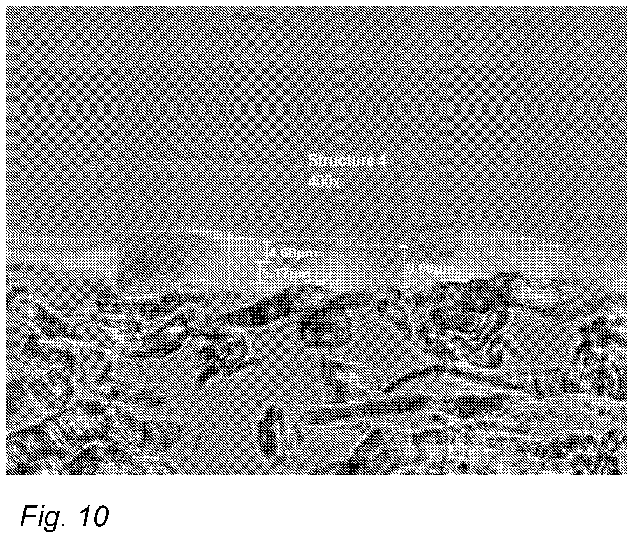

Below a coating weight of about 9.0 g/m² pinholes started to appear in the coating structure 4 (see Figure 12). The thickness of the first and second coating layer was then 5.2 and 4.7 µm, respectively (see Figure 10). The draw down ratio (DDR) at the pinhole limit was 65.

### Example 5 - LDPE monolayer (Comparative example)

The coating structure 5 consisting of the low density polyethylene (LDPE, Borealis CA7230) only as a single coating layer was extrusion coated onto the paperboard (Cupforma Natura 195 gsm, Stora Enso Oy) using the fixed processing parameter set-up.

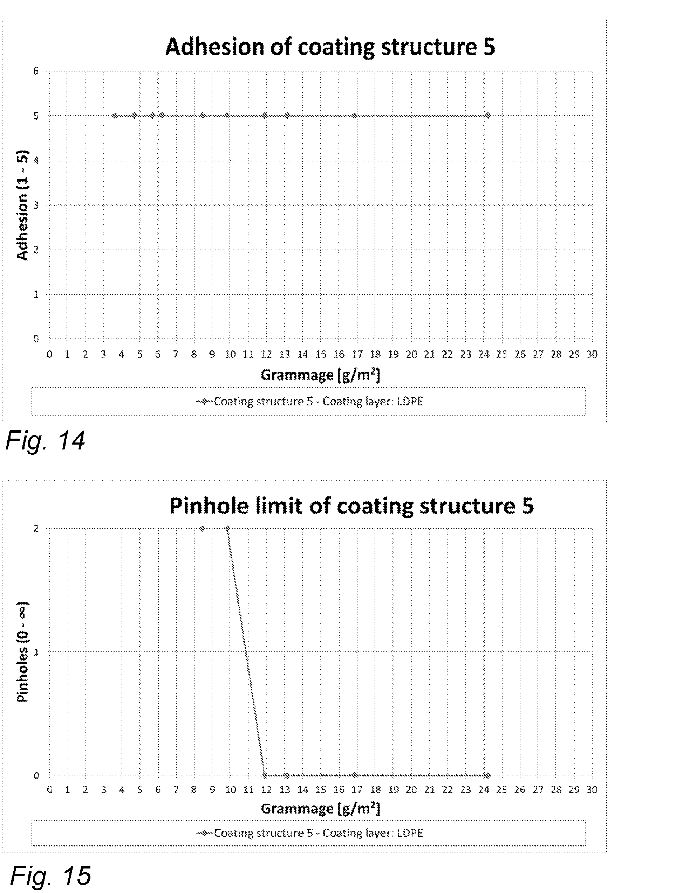

The lowest coating weight obtainable with coating structure 1 was 3.6 g/m² (see Figure 14).

The adhesion strength was perfect (the value of 5) down to the lowest coating weight of 3.6 g/m².

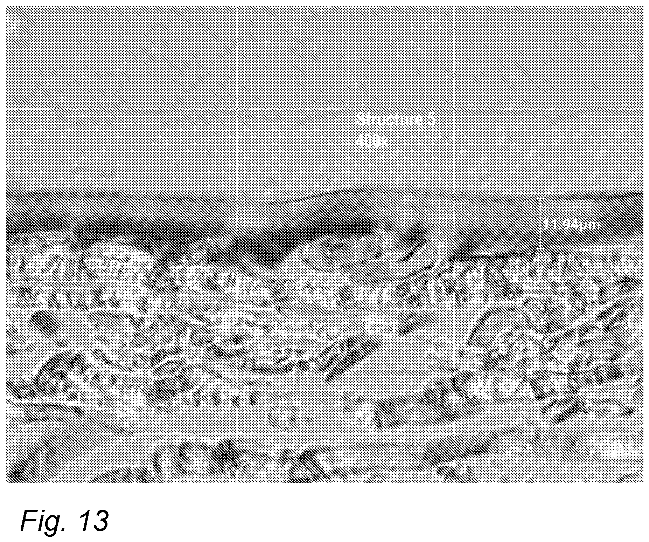

Below a coating weight of about 12 g/m² pinholes started to appear in the coating structure 1 (see Figure 15). The thickness of the first and second coating layer was then 11.9 µm (see Figure 13). The draw down ratio (DDR) at the pinhole limit was 49.

## Claims

1. Paper or paperboard comprising a polymeric coating, said polymeric coating comprising:
a first coating layer attached to the paper or paperboard surface, said first coating layer consisting essentially of a blend of:
1 - 49 % by weight of a high density polyethylene (HDPE), medium density polyethylene (MDPE) or linear low density polyethylene (LLDPE), or a mixture thereof, and
51 - 99 % by weight of a low density polyethylene (LDPE); and
a second coating layer attached to the first coating layer, said second coating layer consisting essentially of a low density polyethylene (LDPE);
wherein the first and second coating layers have a combined grammage of less than 12 g/m² and wherein the first coating layer is formed by extrusion coating onto the paper or paperboard surface and wherein the second coating layer is formed by extrusion coating onto the first coating layer.

2. Paper or paperboard according to any one of the preceding claims, wherein the first and second coating layers have a combined grammage of less than 10 g/m², preferably less than 8 g/m².

3. Paper or paperboard according to any one of the preceding claims, wherein the first coating layer has a grammage of less than 5 g/m², preferably less than 4 g/m², more preferably less than 3 g/m².

4. Paper or paperboard according to any one of the preceding claims, wherein the second coating layer has a grammage of less than 10 g/m², preferably less than 8 g/m², more preferably less than 6 g/m².

5. Paper or paperboard according to any one of the preceding claims, wherein the HDPE has a density in the range of 0.930-0.970 g/cm³, the MDPE has a density in the range of 0.926-0.940 g/cm³, the LLDPE has a density in the range of 0.918-0.940 g/cm³, and/or the LDPE has a density in the range of 0.910-0.940 g/cm³.

6. Paper or paperboard according to any one of the preceding claims, wherein said first coating layer comprises a blend of MDPE and LDPE.

7. Paper or paperboard according to any one of the preceding claims, wherein the second coating layer has a lower density than the first coating layer.

8. Paper or paperboard according to any one of the preceding claims, wherein the second coating layer is the top layer of the polymeric coating.

9. Paper or paperboard according to any one of the preceding claims, wherein said polymeric coating has better adhesion to the paper or paperboard surface than an LDPE coating with the same total grammage.

10. A heat sealed paper or paperboard product comprising paper or paperboard according to any one of the preceding claims.

11. A heat sealed paper or paperboard product according to claim 10, wherein said product is a paper cup.

12. A method for manufacturing a polyethylene (PE) coated paper or paperboard substrate, comprising:
a) providing paper or paperboard substrate,
b) applying at least one layer of a molten first polymeric resin to a surface of said substrate by extrusion coating to form a first polymeric coating layer, said first polymeric resin consisting essentially of a blend of:
1 - 49 % by weight of a high density polyethylene (HDPE), medium density polyethylene (MDPE) or linear low density polyethylene (LLDPE), or a mixture thereof, and
51 - 99 % by weight of a low density polyethylene (LDPE),
c) applying at least one layer of a molten second polymeric resin to a surface of said first polymeric coating layer by extrusion coating to form a second polymeric coating layer, said second polymeric resin consisting essentially of a low density polyethylene (LDPE),
d) allowing the first and second coating layers to cool down and solidify, and
e) recovering the PE coated paper or paperboard substrate.

13. The method according to claim 12, wherein the first and second coating layers are formed simultaneously by coextrusion coating.

## Patentansprüche

1. Papier oder Karton, umfassend eine Polymerbeschichtung, die Polymerbeschichtung umfassend:
eine erste Beschichtungsschicht, die auf die Papier- oder Kartonoberfläche aufgebracht ist, wobei die erste Beschichtungsschicht im Wesentlichen aus einer Mischung besteht aus:
1-49 Gew.-% eines Polyethylens hoher Dichte (HDPE), eines Polyethylens mittlerer Dichte (MDPE) oder eines linearen Polyethylens niedriger Dichte (LLDPE) oder einer Mischung davon, und
51-99 Gew.-% eines Polyethylens niedriger Dichte (LDPE); und
eine zweite Beschichtungsschicht, die auf die erste Beschichtungsschicht aufgebracht ist, wobei die zweite Beschichtungsschicht im Wesentlichen aus einem Polyethylen niedriger Dichte (LDPE) besteht;
wobei die erste und die zweite Beschichtungsschicht ein kombiniertes Flächengewicht von weniger als 12 g/m² aufweisen und wobei die erste Beschichtungsschicht durch Extrusionsbeschichten auf der Papier- oder Kartonoberfläche gebildet wird und wobei die zweite Beschichtungsschicht durch Extrusionsbeschichten auf der ersten Beschichtungsschicht gebildet wird.

2. Papier oder Karton nach einem der vorhergehenden Ansprüche, wobei die erste und die zweite Beschichtungsschicht ein kombiniertes Flächengewicht von weniger als 10 g/m², bevorzugt weniger als 8 g/m² aufweisen.

3. Papier oder Karton nach einem der vorhergehenden Ansprüche, wobei die erste Beschichtungsschicht ein Flächengewicht von weniger als 5 g/m², bevorzugt weniger als 4 g/m², besonders bevorzugt weniger als 3 g/m² aufweist.

4. Papier oder Karton nach einem der vorhergehenden Ansprüche, wobei die zweite Beschichtungsschicht ein Flächengewicht von weniger als 10 g/m², bevorzugt weniger als 8 g/m², besonders bevorzugt weniger als 6 g/m² aufweist.

5. Papier oder Karton nach einem der vorhergehenden Ansprüche, wobei das HDPE eine Dichte im Bereich von 0,930 bis 0,970 g/cm³ aufweist, das MDPE eine Dichte im Bereich von 0,926 bis 0,940 g/cm³ aufweist, das LLDPE eine Dichte im Bereich von 0,918 bis 0,940 g/cm³ aufweist und/oder das LDPE eine Dichte im Bereich von 0,910 bis 0,940 g/cm³ aufweist.

6. Papier oder Karton nach einem der vorhergehenden Ansprüche, wobei die erste Beschichtungsschicht eine Mischung aus MDPE und LDPE umfasst.

7. Papier oder Karton nach einem der vorhergehenden Ansprüche, wobei die zweite Beschichtungsschicht eine geringere Dichte als die erste Beschichtungsschicht aufweist.

8. Papier oder Karton nach einem der vorhergehenden Ansprüche, wobei die zweite Beschichtungsschicht die Deckschicht der Polymerbeschichtung ist.

9. Papier oder Karton nach einem der vorhergehenden Ansprüche, wobei die Polymerbeschichtung eine bessere Haftung auf der Papier- oder Kartonoberfläche aufweist als eine LDPE-Beschichtung mit demselben Gesamtflächengewicht.

10. Heißversiegeltes Papier- oder Kartonprodukt, umfassend Papier oder Karton nach einem der vorhergehenden Ansprüche.

11. Heißversiegeltes Papier- oder Kartonprodukt nach Anspruch 10, wobei das Produkt ein Papierbecher ist.

12. Verfahren zur Herstellung eines mit Polyethylen (PE) beschichteten Papier- oder Kartonsubstrats, umfassend:
a) Vorsehen von Papier- oder Kartonsubstrat,
b) Aufbringen mindestens einer Schicht eines geschmolzenen ersten Polymerharzes auf eine Oberfläche des Substrats durch Extrusionsbeschichten, um eine erste Polymerbeschichtungsschicht zu bilden, wobei das erste Polymerharz im Wesentlichen aus einer Mischung besteht aus:
1-49 Gew.-% eines Polyethylens hoher Dichte (HDPE), eines Polyethylens mittlerer Dichte (MDPE) oder eines linearen Polyethylens niedriger Dichte (LLDPE) oder einer Mischung davon, und
51-99 Gew.-% eines Polyethylens niedriger Dichte (LDPE),
c) Aufbringen mindestens einer Schicht eines geschmolzenen zweiten Polymerharzes auf eine Oberfläche der ersten Polymerbeschichtungsschicht durch Extrusionsbeschichten, um eine zweite Polymerbeschichtungsschicht zu bilden, wobei das zweite Polymerharz im Wesentlichen aus einem Polyethylen niederer Dichte (LDPE) besteht,
d) Abkühlen- und Erstarrenlassen der ersten und zweiten Beschichtungsschichten, und
e) Gewinnen des PE-beschichteten Papier- oder Kartonsubstrats.

13. Verfahren nach Anspruch 12, wobei die erste und die zweite Beschichtungsschicht gleichzeitig durch Coextrusionsbeschichten gebildet werden.

## Revendications

1. Papier ou carton comprenant un revêtement polymère, ledit revêtement polymère comprenant :
une première couche de revêtement fixée à la surface du papier ou du carton, ladite première couche de revêtement consistant essentiellement en un mélange de :
1 à 49 % en poids d'un polyéthylène haute densité (HDPE), d'un polyéthylène de densité moyenne (MDPE) ou d'un polyéthylène basse densité linéaire (LLDPE), ou d'un mélange de ceux-ci, et
51 à 99 % en poids d'un polyéthylène basse densité (LDPE) ; et
une deuxième couche de revêtement fixée à la première couche de revêtement, ladite deuxième couche de revêtement consistant essentiellement en un polyéthylène basse densité (LDPE) ;
dans lequel les première et deuxième couches de revêtement ont un grammage combiné inférieur à 12 g/m² et dans lequel la première couche de revêtement est formée par revêtement par extrusion sur la surface du papier ou du carton et dans lequel la deuxième couche de revêtement est formée par revêtement par extrusion sur la première couche de revêtement.

2. Papier ou carton selon l'une quelconque des revendications précédentes, dans lequel les première et deuxième couches de revêtement ont un grammage combiné inférieur à 10 g/m², de préférence inférieur à 8 g/m².

3. Papier ou carton selon l'une quelconque des revendications précédentes, dans lequel la première couche de revêtement a un grammage inférieur à 5 g/m², de préférence inférieur à 4 g/m², plus préférablement inférieur à 3 g/m².

4. Papier ou carton selon l'une quelconque des revendications précédentes, dans lequel la deuxième couche de revêtement a un grammage inférieur à 10 g/m², de préférence inférieur à 8 g/m², plus préférablement inférieur à 6 g/m².

5. Papier ou carton selon l'une quelconque des revendications précédentes, dans lequel le HDPE a une masse volumique dans la plage de 0,930 à 0,970 g/cm³, le MDPE a une masse volumique dans la plage de 0,926 à 0,940 g/cm³, le LLDPE a une masse volumique dans la plage de 0,918 à 0,940 g/cm³, et/ou le LDPE a une masse volumique dans la plage de 0,910 à 0,940 g/cm³.

6. Papier ou carton selon l'une quelconque des revendications précédentes, dans lequel ladite première couche de revêtement comprend un mélange de MDPE et de LDPE.

7. Papier ou carton selon l'une quelconque des revendications précédentes, dans lequel la deuxième couche de revêtement a une densité inférieure à celle de la première couche de revêtement.

8. Papier ou carton selon l'une quelconque des revendications précédentes, dans lequel la deuxième couche de revêtement est la couche supérieure du revêtement polymère.

9. Papier ou carton selon l'une quelconque des revendications précédentes, dans lequel ledit revêtement polymère a une meilleure adhérence à la surface du papier ou du carton qu'un revêtement LDPE ayant le même grammage total.

10. Produit en papier ou en carton thermoscellé comprenant du papier ou du carton selon l'une quelconque des revendications précédentes.

11. Produit en papier ou en carton thermoscellé selon la revendication 10, dans lequel ledit produit est un gobelet en papier.

12. Procédé de fabrication d'un substrat en papier ou en carton revêtu de polyéthylène (PE), comprenant :
a) la fourniture d'un substrat en papier ou en carton,
b) appliquer au moins une couche d'une première résine polymère fondue sur une surface dudit substrat par revêtement par extrusion pour former une première couche de revêtement polymère, ladite première résine polymère consistant essentiellement en un mélange de :
1 à 49 % en poids d'un polyéthylène haute densité (HDPE), d'un polyéthylène de densité moyenne (MDPE) ou d'un polyéthylène basse densité linéaire (LLDPE), ou d'un mélange de ceux-ci, et
51 à 99 % en poids d'un polyéthylène basse densité (LDPE),
c) appliquer au moins une couche d'une deuxième résine polymère fondue sur une surface de ladite première couche de revêtement polymère par revêtement par extrusion pour former une deuxième couche de revêtement polymère, ladite deuxième résine polymère consistant essentiellement en un polyéthylène basse densité (LDPE),
d) laisser les première et deuxième couches de revêtement refroidir et se solidifier, et
e) récupérer le substrat en papier ou en carton revêtu de PE.

13. Procédé selon la revendication 12, dans lequel les première et deuxième couches de revêtement sont formées simultanément par revêtement par coextrusion.
